# EUROPÄISCHE PATENTANMELDUNG

(11) **EP 3 878 821 A1**
(43) Veröffentlichungstag der Anmeldung: **15.09.2021**
(21) Anmeldenummer: 21162191.7
(22) Anmeldetag: 12.03.2021
(51) Int. Cl.: C02F 3/30, C02F 3/00, C02F 1/24, C02F 1/78, C02F 103/00

(54) **VERFAHREN ZUR AUFBEREITUNG VON WASSER UND WASSERAUFBEREITUNGSANLAGE**

(30) Priorität: 12.03.2020 DE 102020106761
(71) Anmelder: Hochschule für Technik und Wirtschaft des Saarlandes, 66117 Saarbrücken (DE)
(72) Erfinder: Ernst, Anneliese, 66115 Saarbrücken (DE); Wagner, Kai, 66763 Dillingen (DE); Steinbach, Christian, 66333 Völklingen (DE); Waller, Uwe, 66115 Saarbrücken (DE); Faupel, Benedikt, 52152 Simmerath (DE)
(74) Vertreter: Patentanwälte Bernhardt / Wolff Partnerschaft mbB

(57) **Zusammenfassung**

Die Erfindung betrifft ein Verfahren zur Aufbereitung von Wasser, bei dem das Wasser in einer Einrichtung (2) zur Denitrifikation und in einer Einrichtung (3) zur Oxidation von Nitrit, das bei der Denitrifikation des Wassers gebildet wird, behandelt wird. Erfindungsgemäß wird zur Verfahrenskontrolle das Oxidations-Reduktions-Potenzial des Wassers gemessen. Zweckmäßigerweise wird das Oxidations-Reduktions-Potenzial in der Denitrifikationseinrichtung (2) und/oder in der Oxidationseinrichtung (3) gemessen. In einer Ausgestaltung der Erfindung wird der Volumenstrom des Wassers in die Denitrifikationseinrichtung (2) und/oder der Volumenstrom des Wassers von der in der Denitrifikationseinrichtung (2) in die Oxidationseinrichtung (3) oder ein Massenstrom eines Elektronendonors, vorzugsweise einer organischen Kohlenstoffverbindung, oder/und des Oxidationsmittels in das Wasser eingestellt, vorzugsweise gesteuert oder zu geregelt. Das Verfahren wird vorzugsweise in einer Aquakulturanlage zur Aufbereitung von Wasser, in dem in der Aquakulturanlage Lebewesen gehalten werden, oder in einer Kläranlage zur Aufbereitung von Abwasser durchgeführt.

Die Erfindung betrifft ferner eine Wasseraufbereitungsanlage, mit der sich das Verfahren durchführen lässt.

## Beschreibung

Die Erfindung betrifft ein Verfahren zur Aufbereitung von Wasser, bei dem Wasser in einer Einrichtung zur Denitrifikation und in einer Einrichtung zur Oxidation von Nitrit, das bei der Denitrifikation des Wassers gebildet wird, behandelt wird.
Die Erfindung betrifft ferner eine Wasseraufbereitungsanlage.

Solche Wasseraufbereitungsverfahren sind durch Benutzung für Aquakulturanlagen bekannt. Das Wasser der Aquakulturen wird durch Ausscheidungen von Fischen oder anderen Lebewesen, die dort gehalten werden, verschmutzt. Für die Produktion ist deshalb eine schnelle und effiziente Entfernung aller Ausscheidungsprodukte zur Gesundhaltung der Lebewesen und Erhalt der Produktivität unerlässlich. Um klares Wasser zu erhalten, werden in modernen Aquakulturanlagen feste Ausscheidungsprodukte, Futterreste und Feintrübe mittels ein zweistufiges physikalisches Reinigungsverfahren, bei dem das Wasser mittels eines Trommelfilters und einer ozonverstärkten Flotationseinrichtung behandelt wird, entfernt. Im Wasser gelöste Ausscheidungsprodukte wie organische Kohlenstoffverbindungen, Ammoniak, Harnstoff, Kohlendioxid, Phosphat werden von Bakterien in Biofiltern, z.B. in Gase und Bakterienbiomasse, umgewandelt. Die gebildete Bakterienbiomasse wird mit Hilfe der physikalischen Filter entfernt.
Gelöste Stickstoffverbindungen können über bakterielle Prozesse entfernt werden, die zur Bildung von Stickstoff (N₂) führen. Dieser kann aufgrund seiner geringen Löslichkeit das Prozesswasser schnell verlassen. Für Aquakulturanlagen ist es bekannt, ein Kombinationsverfahren aus Nitrifikation und Denitrifikation einzusetzen. Von Fischen ausgeschiedenes Ammoniak und Ammonium wird von nitrifizierenden Bakterien in einem gut belüfteten, aeroben Biofilter in Nitrat umgewandelt. Nitrat ist zwar weniger giftig als Ammoniak und als das von Bakterien als Zwischenprodukt gebildete Nitrit, jedoch werden auftretende subletale Schädigungen der Lebewesen zunehmend mit den in Aquakulturen üblichen hohen Nitratkonzentrationen in Verbindung gebracht.
In Abwesenheit von Sauerstoff können viele Bakterien die Anionen Nitrat, Nitrit und Sulfat nutzen, um organische Kohlenstoffverbindungen oder andere Energieträger zu oxidieren. Das dabei reduzierte Zentralatom dieser Anionen wird ausgeschieden. Auf diese Weise reduzieren Bakterien in der Denitrifikation Nitrat zu N₂.
Eine Elimination des Stickstoffs durch Denitrifikation erfolgt jedoch nur, wenn die organischen Kohlenstoffverbindungen, die von den Bakterien als Elektronendonoren für die Reduktion von Nitrat genutzt werden, eine vollständige Reduktion von Nitrat zu N₂ erlauben. Die Reduktion von Nitrat erfolgt schrittweise über die nachfolgend genannten Zwischenprodukte.

NO₃⁻ → NO₂⁻ → NO → N₂O → N₂ (Reaktionsgleichung 1)

Die vollständige Reduktion benötigt 5 Elektronen pro N-Atom. Ist die Versorgung mit organische Kohlenstoffverbindungen begrenzt, wird ein Teil des Nitrats nur teilweise reduziert. In dieser partiellen Denitrifikation entstehen Zwischenprodukte wie Nitrit, Stickoxid und Lachgas.
Allerdings können bei einer zu großen externen Zufuhr vom Kohlenstoff Situationen eintreten, in welchen der Elektronenakzeptor Nitrat knapp wird. In diesem Fall können Nitrat-ammonifizierende Bakterien 8 Elektronen auf das Zentralatom des Nitrats übertragen, was zur Bildung von Ammoniak führt. Außerdem kann die Kohlenstoffquelle auch von sulfatreduzierenden Bakterien zur Vermehrung unter Schwefelwasserstoffbildung genutzt werden.

Bisher wird in Aquakulturanlagen die Effizienz der Stickstoffelimination über einen Vergleich der Konzentrationen an gelöstem, chemisch gebundenem Stickstoff im Einlauf und Auslauf einer Denitrifikationsanlage messtechnisch erfasst. Zum Beispiel kann mit Hilfe eines Elementanalysators über eine oxidative Verbrennung organischer Substanzen die Konzentration von gelösten Stickstoffverbindungen und organischem Kohlenstoff bestimmt werden. Sogenannte Autoanalysatoren werden eingesetzt, um mit spezifischen Farbreaktion die Anteile verschiedenen Stickstoffverbindungen einzeln zu erfassen. Eine Einzelerfassung ist auch mit einer Ionenchromatographie möglich. Je nach Messmethode müssen die Proben durch Filtration oder Homogenisierung vorbehandelt werden, um korrekte Ergebnisse zu erhalten. Die Verfahren wurden in einem DWA-Regelwerk, Merkblatt DWA-M 269 (2018), erst kürzlich zusammengefasst.

Da der instrumentelle und personelle Aufwand, der für die Durchführung einer Stickstoffelimination durch Denitrifikation erforderlich ist, sehr groß ist, wird die Denitrifikation oftmals ausgelagert. Das bei der Nitrifikation entstandene Nitrat wird durch einen regelmäßigen partiellen Wasseraustausch, der in einer Anlage, in der das Wasser in einem Kreislauf geführt wird, bis zu 10 % des für die Produktion benötigten Wasservolumens pro Tag betragen kann, in einem Konzentrationsbereich gehalten, der für die Tiere noch keine offensichtlich negativen Auswirkungen hat. Das Abwasser muss in diesem Fall nachbehandelt werden.

Der Erfindung liegt die Aufgabe zugrunde, eine einfache Überwachung des eingangs genannten Verfahrens zu ermöglichen.

Erfindungsgemäß wird diese Aufgabe dadurch gelöst, dass zur Verfahrenskontrolle das Oxidations-Reduktions-Potenzials des Wassers gemessen wird.

Vorteilhaft lässt sich die Wasseraufbereitung durch die Bestimmung des Oxidations-Reduktions-Potenzials des Wassers, das vorzugsweise mittels einer Oxidations-Reduktions-Potenzial-Sonde ermittelt wird, besonders einfach kontrollieren.
Wird in der Denitrifikationseinrichtung Nitrat in Nitrit umgewandelt, wird nitrithaltiges Wasser aus der Denitrifikationseinrichtung in die Oxidationseinrichtung transportiert und das Nitrit reagiert dort mit einem Oxidationsmittel, vorzugsweise Ozon, in folgender Reaktion zu Nitrat:

O₃ + NO₂⁻ → O₂ + NO₃⁻ (Reaktionsgleichung 2)

Durch die Reaktion mit dem Nitrit wird das Oxidationsmittel in der Oxidationseinrichtung abgebaut. Dies hat eine Absenkung des Oxidations-Reduktions-Potenzials auf das Niveau des oxidationsmittelfreien Prozesswassers der Wasseraufbereitungsanlage zur Folge.
Die Absenkung weist die Zufuhr von nitrithaltigem Wasser aus der Denitrifikationseinrichtung nach.

In einer Ausgestaltung der Erfindung wird das Oxidations-Reduktions-Potenzial in der Oxidationseinrichtung und/oder in der Denitrifikationseinrichtung gemessen.
Die Messung in der Oxidationseinrichtung gibt Auskunft darüber, ob mit dem Wasser aus der Denitrifikationseinrichtung Nitrit in die Oxidationseinrichtung transportiert worden ist.
Mittels der Messung in der Denitrifikationseinrichtung lässt sich bestimmen, wie die Bakterien auf sich ändernde Verfahrensparameter reagieren. Herrscht in der Denitrifikationseinrichtung ein für ein sauerstofffreies Milieu charakteristischer negativer Wert des Oxidations-Reduktions-Potenzials, wird dieser durch den Zulauf von sauerstoffhaltigem Prozesswasser angehoben. Die Zufuhr eines Elektronendonors, z.B. einer von organischen Kohlenstoffverbindung, hat in der Regel keine direkte Wirkung auf das Oxidations-Reduktions-Potenzial. Wenn die Elektrondendonorzufuhr jedoch zu einer Vermehrung von Bakterien und damit zu einem erhöhten Verbrauch von Sauerstoff und anderen Oxidationsmitteln führt, sinkt das Oxidations-Reduktions-Potenzial.

Zweckmäßigerweise wird das Wasser von der Denitrifikationseinrichtung, vorzugsweise direkt, in die Oxidationseinrichtung geleitet.

Die Oxidationseinrichtung umfasst zweckmäßigerweise eine Einrichtung zum Trennen von Stoffen aus dem Wasser, vorzugsweise einen Flotationsapparat. Das Oxidationsmittel wird zum Abschäumen bevorzugt in, insbesondere kleinen, Blasen in die Trenneinrichtung eingebracht, vorzugsweise mittels einer Düse, insbesondere einer Venturi-Düse.
In einer Ausführungsform der Erfindung wird das Nitrit mittels eines Oxidationsmittels, vorzugsweise dem Ozon, insbesondere einer Ozon-Luft-Mischung, oxidiert.
In der Oxidationseinrichtung wird durch den Eintrag des Oxidationsmittels Schaum erzeugt. Das Oxidationsmittel oxidiert insbesondere Mehrfachbindungen in organischen Kohlenstoffverbindungen. Das Oxidationsmittel dient also nicht bloß der Entkeimung des Prozesswassers, sondern vorrangig der Freisetzung von oberflächenaktiven Substanzen wie Proteinen aus den im Prozesswasser mitgeführten Bakterien, wobei die Proteine den Schaum stabilisieren. An der Luft/Wasser-Interphase der Schaumblasen sammeln sich nicht nur die oberflächenaktiven Substanzen, sondern auch kleine Partikel wie Bakterien und Viren, die mit dem Schaum ausgetragen werden.

Die nötige Menge an dem Oxidationsmittel ist von der organischen Belastung des Prozesswassers abhängig. Anhand von vorgegebenen Prognosewerten, die anhand von Versuchen bei Durchführung des Verfahrens ermittelt worden sind, wird die Zugabe an dem Oxidationsmittel so dosiert, dass in dem Wasser, das aus dem Flotationsapparat heraustritt, kein Ozon nachweisbar ist oder/und das Oxidations-Reduktions-Potenzial auf dem jeweiligen Wert von sauberem, luftgesättigtem Prozesswasser bleibt.

Die Erfindung erweist sich als besonders vorteilhaft, wenn ein Ergebnis der Messung des Oxidations-Reduktions-Potenzials zum Einstellen, vorzugsweise zur Regelung, des Wasseraufbereitungsverfahrens benutzt wird.

In einer Ausgestaltung der Erfindung wird der Volumenstrom, mit dem das Wasser in die Denitrifikationseinrichtung transportiert wird, und/oder der Volumenstrom, mit dem das Wasser von der in der Denitrifikationseinrichtung in die Oxidationseinrichtung transportiert wird, eingestellt, vorzugsweise gesteuert oder geregelt.

In einer Ausführungsform der Erfindung wird ein Massenstrom eines Elektronendonors, vorzugsweise einer organischen Kohlenstoffverbindung wie Methanol, Essigsäure oder Glycerol, in das Wasser eingestellt, vorzugsweise gesteuert oder geregelt.

Zweckmäßigerweise wird zumindest einer der genannten Volumenströme und/oder der Massenstrom des Elektronendonors in Abhängigkeit von der Messung des Oxidations-Reduktions-Potenzials geregelt.

Anhand von, vorzugsweise periodischen oder kontinuierlichen, Messungen des Oxidations-Reduktions-Potenzials, wird in einer Ausführungsform der Erfindung die Menge des zuzuführenden Elektronendonors, vorzugsweise des organischen Kohlenstoffs, ermittelt. Wenn toxische Produkte aus dem Nitratabbau wie Ammonium oder Nitrit in der Denitrifikationseinrichtung aufgefunden werden, wird das Verhältnis der Zufuhr des Elektronendonors und der Stickstoffverbindungen, die anlagenintern vorhanden sind, so verändert, dass sich die toxischen Produkte zurückbilden.

In einer Weiterbildung der Erfindung wird, insbesondere im Rahmen der Regelung, der Volumenstrom oder/und der Massenstrom geändert, wenn bei Messung des Oxidations-Reduktions-Potenzials in der Denitrifikationseinrichtung ein vorbestimmter, vorzugsweise unterer, Grenzwert oder wenn bei Messung des Oxidations-Reduktions-Potenzials in der Oxidationseinrichtung ein vorbestimmter, vorzugsweise unterer, Grenzwert ermittelt wird.
In einer Ausführungsform der Erfindung wird, insbesondere im Rahmen der Regelung, nach Änderung des Volumenstroms und/oder des Elektronendonormassestroms aufgrund des Erreichens des Grenzwerts zumindest einer der Grenzwerte verändert, vorzugsweise derart, dass die Differenz der Grenzwerte des Oxidations-Reduktions-Potenzials in der Denitrifikationseinrichtung verkleinert wird. Besonders bevorzugt wird der untere Grenzwert des Oxidations-Reduktions-Potenzials in der Oxidationseinrichtung vergrößert.

Zweckmäßigerweise wird, insbesondere im Rahmen der Regelung, für den Volumenstrom oder/und den Massenstrom ein oberer und/oder unterer Grenzwert, d.h. jeweilig ein Minimal- und/oder ein Maximalstrom, vorgesehen. In einer Ausführungsform der Erfindung wird zumindest einer der Grenzwerte derart verändert, dass die sich die Differenz zwischen oberem und unterem Grenzwert verringert.

In einer Ausgestaltung der Erfindung werden, insbesondere im Rahmen der Regelung, die Grenzwerte des Oxidations-Reduktions-Potenzials in der Denitrifikationseinrichtung, die Grenzwerte des Oxidations-Reduktions-Potenzials in der Oxidationseinrichtung und die Grenzwerte des Volumenstroms oder/und den Massenstroms nacheinander, insbesondere iterativ, geändert. Es hat sich als besonders vorteilhaft erwiesen, die Grenzwerte derart zu ändern, dass der Bereich, in welchem der Volumenstrom oder/und der Massenstrom im Zuge der Prozessführung geändert werden, möglichst klein wird.

Vorstellbar wäre ferner, einen Volumenstrom, mit dem das Oxidationsmittel, das dem Wasser zur Oxidation des Nitrits zugeführt wird, einzustellen, vorzugsweise zu steuern oder zu regeln.

In der bevorzugten Ausführungsform der Erfindung wird das Verfahren in einer Aquakulturanlage zur Aufbereitung des Wassers, in dem in der Aquakulturanlage aufzuziehende Lebewesen, vorzugsweise Fische, gehalten werden, durchgeführt. Das Verfahren eignet sich dafür besonders gut, da wie oben erläutert feste Ausscheidungsprodukte, Futterreste und Feintrübe, die mit dem Betrieb der Aquakulturanlage einhergehen, aus dem Wasser entfernt werden müssen.

Die Erfindung lässt sich darüber hinaus besonders vorteilhaft in einer Kläranlage zur Aufbereitung von Abwasser oder zur Stickstoffeliminierung bei der Trinkwasseraufbereitung verwenden.

Die genannte erfindungsgemäße Wasseraufbereitungsanlage ist zur Durchführung zumindest einzelner der genannten Verfahrensschritte eingerichtet.
Sie weist dazu eine Einrichtung zur Messung des Oxidations-Reduktions-Potenzials des Wassers auf.

Die Erfindung wird nachfolgend anhand von Beispielen und den beiliegenden Zeichnungen, die sich auf die Beispiele beziehen, näher erläutert. Es zeigen:
- Fig. 1: schematisch eine erfindungsgemäße Wasseraufbereitungsanlage
- Fig. 2: Messergebnisse bei Betrieb der Wasseraufbereitungsanlage nach Fig. 1,
- Fig. 3 bis 5: weitere Messergebnisse bei Betrieb der Wasseraufbereitungsanlage nach Fig. 1, und
- Fig. 6: schematisch eine Möglichkeit zur Regelung der Wasseraufbereitungsanlage nach Fig. 1.

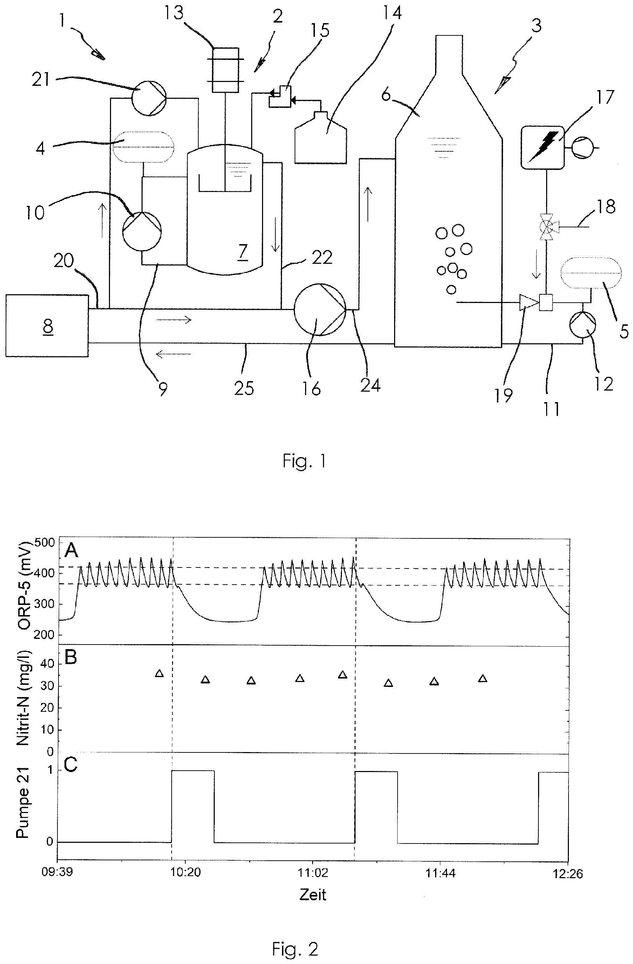

Ein in Fig. 1 schematisch dargestellte erfindungsgemäße Wasseraufbereitungsvorrichtung 1 weist eine Denitrifikationseinrichtung 2 und eine Oxidationseinrichtung 3 auf, die mit einem Wasserreservoir 8 verbunden sind. Der Wasserreservoir 8 ist beispielsweise eine Aquakulturanlage, ein Abwasserbecken einer Kläranlage, in der Wasser aufzubereiten ist, oder ein Trinkwasserreservoir, in dem Nitrat-Stickstoff durch Denitrifikation eliminiert werden soll.
Die Denitrifikationseinrichtung 2 weist einen anaeroben Biofilter 7 auf, in welchem Nitrat von denitrifizierenden Bakterien in Nitrit als Zwischenprodukt und Luftstickstoff als Endprodukt umgewandelt wird, wofür, wie oben näher erläutert ist, organischer Kohlenstoff als Elektronendonor benötigt wird. Zur Versorgung des Biofilters 7 mit dem Elektronendonor ist eine organische Kohlenstoffquelle 14, z.B. Methanol, Essigsäure oder Glycerol, vorgesehen. Der Kohlenstoff lässt sich über eine Dosiereinrichtung 15 in kontrollierter Abgaberate dem Biofilter 7 zuführen. In dem Biofilter 7 ist zur Herbeiführung einer guten Durchmischung des Wassers eine Mischeinrichtung, z.B. ein Rührer 13, angeordnet. Ferner weist die Denitrifikationseinrichtung 2 eine Sonde 4 zur Messung des Oxidations-Reduktions-Potenzials (ORP-Sonde) auf. Die ORP-Sonde 4 kann mit dem Biofilter 7 über eine Rohrleitung verbunden sein, durch die mittels einer Pumpe 10 das Wasser aus dem Biofilter 7 zugeführt wird.

Die Oxidationseinrichtung 3 weist einen Flotationsapparat 6 auf, mittels dessen sich oberflächenaktive Subtanzen und kleinere Partikel ausschäumen lassen. Zur Zuführung eines Ozon-Luft-Gemisches in den Flotationsapparat 6 ist eine Düse 19 vorgesehen, mittels derer sich Ozon aus einem Ozonreservoir 17 sowie Luft über eine Luftzufuhr 18 aus der Umgebung zuführen lassen. Ferner ist eine Rohrleitung 11 vorgesehen, durch die sich mittels einer Pumpe 12 Wasser aus dem Flotationsapparat 6 zu einer weiteren Sonde 5 zur Messung des ORP-Potenzials im Flotationsapparat 6 transportieren und wieder in den Flotationsapparat 6 zurückführen lässt.

Zur Zuführung des Wassers aus dem Wasserreservoir 8 zu der Denitrifikationseinrichtung ist eine Zuführungsrohrleitung 20 vorgesehen, die mit einer Pumpe 21 versehen ist. Aus der Denitrifikationseinrichtung 2 führt eine Abführungsrohrleitung 22, die in eine Bypassrohrleitung 23 mündet, welcher die Zuführungsrohrleitung 20 und die Abführungsrohrleitung 22 miteinander verbindet und mit einer Zufuhrrohrleitung 24 verbunden ist, die das Wasser aus der Denitrifikationseinrichtung 2 mittels einer Pumpe 16 in die Oxidationseinrichtung 3 transportiert.

Zum Leiten des Wassers aus der Oxidationseinrichtung 3 ist eine Abführrohrleitung 25 vorgesehen, mittels derer sich das aufbereitete Wasser zu dem Wasserreservoir 8 leiten lässt.

Wie oben erläutert ist, ist es zur vollständigen Reduktion des Nitrats einerseits notwendig, dass ausreichend Kohlenstoff zur Verfügung steht. Andererseits bildet sich Ammoniak bei zu hohem Gehalt an Kohlenstoff im Verhältnis zu dem Nitrat und Sulfat reduzierende Bakterien nutzen überschüssigen Kohlenstoff zur Vermehrung unter Bildung von Schwefelwasserstoff. Deshalb ist es notwendig, die Kohlenstoffzufuhr an die jeweilig ablaufenden Prozesse, insbesondere die Mengen an jeweilig vorhandenem Nitrat, anzupassen. Dazu wird mittels der ORP-Sonden 4,5 das Oxidations-Reduktions-Potenzial in der Denitrifikationseinrichtung 2 und der Oxidationseinrichtung 3 bestimmt.

Die Zuführung des Ozons in den Flotationsapparat 6, die der Freisetzung von oberflächenaktiven Substanzen wie Proteinen aus den im Wasser mitgeführten Bakterien dient, führt zu einer starken Erhöhung des Oxidations-Reduktions-Potenzials im Flotationsapparat 6. Wird in der Denitrifikationseinrichtung 2 ein Teil des Nitrats in Nitrit umgewandelt und das Nitrit aus der Denitrifikationseinrichtung 2 in den Flotationsapparat 6 transportiert, reagiert das Ozon schnell und irreversibel unter Bildung von Nitrat gemäß der oben wiedergegebenen Reaktionsgleichung 2.
Da durch die Reaktion mit dem Nitrit im Flotationsapparat 6 Ozon abgebaut wird, kommt es zu einer Verringerung des Oxidations-Reduktions-Potenzials, die sich mittels der ORP-Sonde 5 detektieren lässt. Folglich lässt sich mit der ORP-Sonde 5 nachweisen, wenn in der Denitrifikationseinrichtung 2 Nitrit gebildet wird und über die Abführungsrohrleitung 22 ausgetragen wird.

In Fig. 2 sind Messergebnisse gezeigt, die die Reaktion der Messung des Oxidations-Reduktions-Potenzials auf eine Zuführung von nitrathaltigem Wasser in die Denitrifikationseinrichtung 2 und von dort in den Flotationsapparat 6 zeigen.
Wie in Fig. 2 in der Zeile C gezeigt ist, wurde in zeitlichen Abständen mittels der Pumpe 21 nitrathaltiges Wasser in die Denitrifikationseinrichtung 2 gepumpt. Zeile B zeigt, dass in der Denitrifikationseinrichtung Nitrit gebildet worden ist. In Zeile A zeigt Fig. 2 die Messung des Oxidations-Reduktions-Potenzials im Flotationsapparat 6 mittels der ORP-Sonde 5. Wie sich zeigt, sinkt das Oxidations-Reduktions-Potenzial bei kontinuierlicher Zuführung von Ozon über die Düse 19 in den Flotationsapparat 6 jeweilig nach Zuführung des Wassers in die Denitrifikationseinrichtung 2 und damit nach Weiterleitung von Wasser aus der Denitrifikationseinrichtung 2 in den Flotationsapparat 6 ab. Das Absinken des Oxidations-Reduktions-Potenzials beruht auf der Reaktion von Nitrit und Ozon nach Reaktionsgleichung 2.

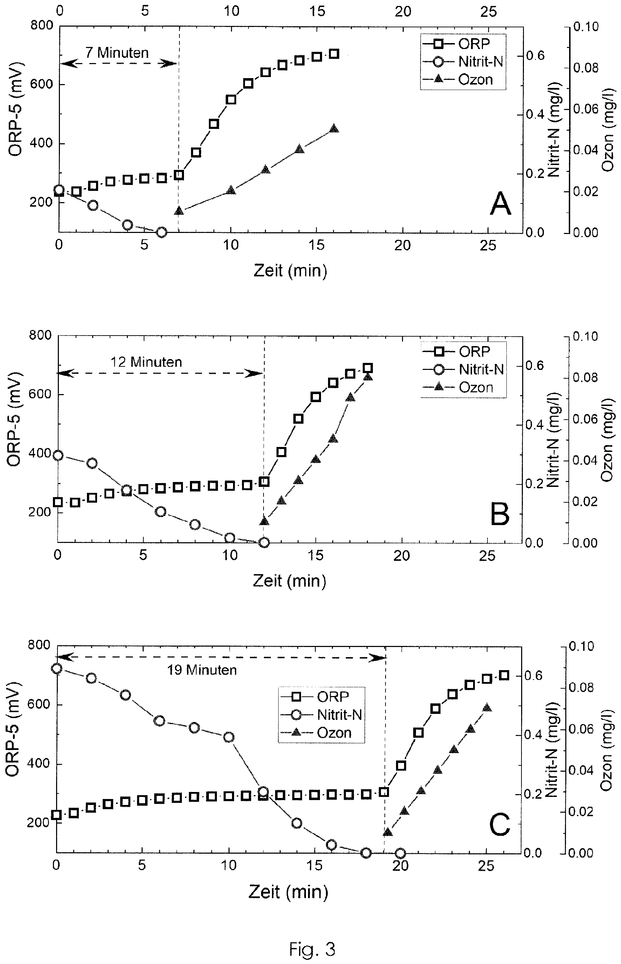

Die Wirkung von Nitrit auf das Oxidations-Reduktions-Potenzial ist auch anhand der Messergebnisse, die in Fig. 3 dargestellt sind, zu erkennen. Zur Überprüfung der Ergebnisse wurde im Flotationsapparat 6 zusätzlich eine Ozonsonde vorgesehen, mittels derer sich der Gehalt an Ozon im Prozesswasser bestimmen lässt. Zur Durchführung des Versuchs wurde der Flotationsapparat 6 mit Wasser aus dem Wasserreservoir 8 befüllt und danach von der Anlage getrennt. Zusätzlich wurde eine vorbestimmte Menge an Natriumnitrit zugegeben. Zum Zeitpunkt t=0 wurde das Ozon-Luft-Gemisch über die Düse 19 des Flotationsapparats 6 eingebracht. Fig. 3 zeigt, dass der Gehalt an Nitrit aufgrund von Oxidation des Nitrits nach Reaktionsgleichung 2 bis auf 0 absinkt. Solange Nitrit im Wasser vorhanden ist, ist trotz der Zuführung des Ozons im Wasser kein Ozon nachweisbar. Der Messwert des Oxidations-Reduktions-Potenzials an der ORP-Sonde 5 bleibt auf dem für luftgesättigtes Wasser typischen Messwert und steigt erst an, wenn das Nitrit vollständig oxidiert ist. Gleichzeitig konnte, wie die Messergebnisse zeigen, dann auch Ozon mit der Ozonsonde nachgewiesen werden.
Folglich lässt ich auch anhand der Versuche nachweisen, dass mittels der Bestimmung des Oxidations-Reduktions-Potenzials im Flotationsapparat 6 der Gehalt an Nitrit im Wasser bestimmen lässt.

In der Denitrifikationseinrichtung 2 liegt normalerweise ein für sauerstofffreies Milieu charakteristisches negatives Oxidations-Reduktions-Potenzial vor, das bei Zulauf von sauerstoffhaltigem Wasser steigt. Wird der Denitrifikationseinrichtung 2 Kohlenstoff aus dem Kohlenstoffreservoir 14 zugeführt, führt dies zu einer Vermehrung von Bakterien und damit zu einem erhöhten Verbrauch von Sauerstoff und anderen Oxidationsmitteln. Dies wiederum führt zu einem Absinken des Oxidations-Reduktions-Potenzials, das sich messen lässt. Allerdings läuft die durch die Bakterienvermehrung verursachte Änderung des Oxidations-Reduktions-Potenzials über einen Zeitraum von mehreren Stunden ab, da die Bakterien eine gewisse Zeit benötigen um sich zu vermehren.

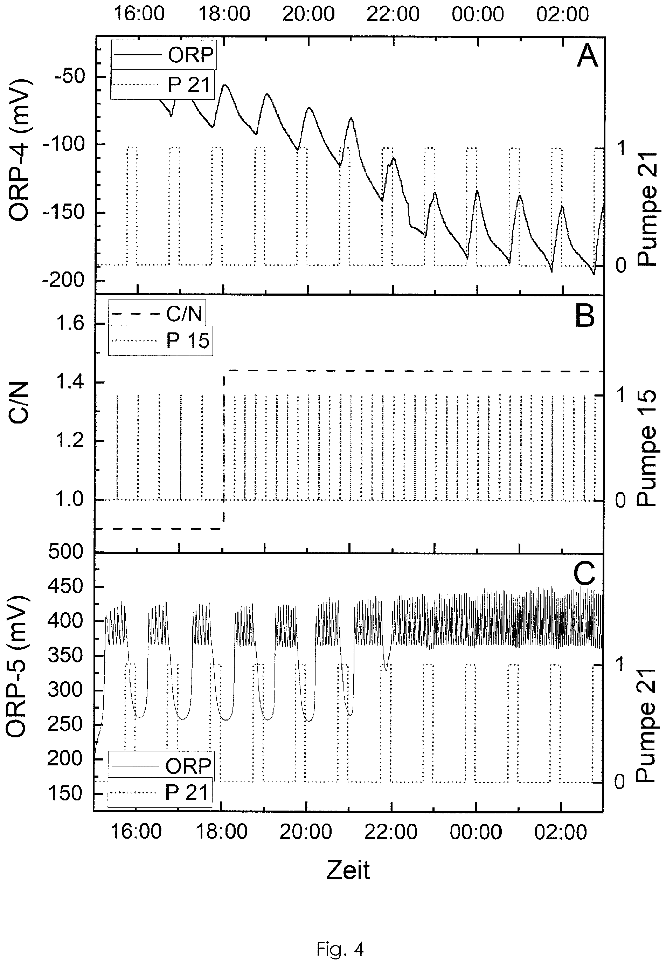

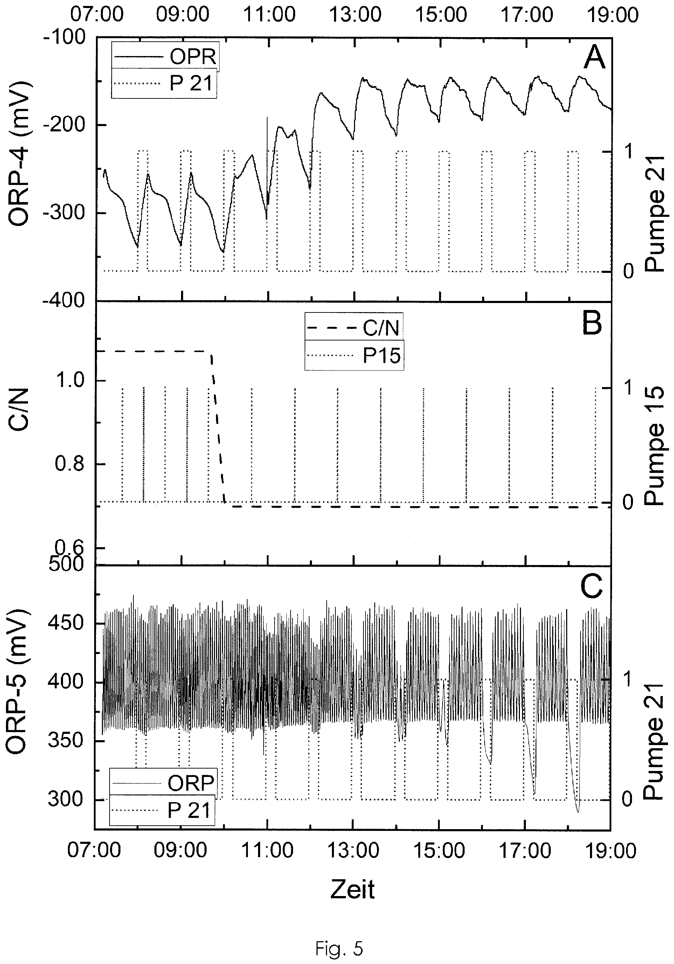

Im Folgenden wird an zwei Beispielen und den Fig. 4 und 5 beschrieben, welche Wirkung die Bakterienaktivität auf das Oxidations-Reduktions-Potenzial in der Denitrifikationseinrichtung 2 und im Flotationsapparat 6 hat.
Herrscht im Biofilter 7 der Denitrifikationseinrichtung 2 ein für ein sauerstofffreies Milieu charakteristisches negatives Oxidations-Reduktions-Potenzial, steigt dieses durch den Zulauf von sauerstoffhaltigem Prozesswasser aus dem Wasserreservoir 8. Zusammen mit der Schaltstellung der Zuführungspumpe 21 ist dies in den Fig. 4A und 5A dargestellt. In den Fig. 4 und 5 sind mit ORP-4 Messergebnisse der ORP-Sonde 4, mit Pumpe 15 bzw. P15 Pumpzustände der Dosiereinrichtung 15 und mit Pumpe 21 bzw. P21 Pumpzustände der Zuführungspumpe 21 gezeigt.
Die Zufuhr von Kohlenstoff aus dem Kohlenstoffreservoir hat keine direkte Wirkung auf das Oxidations-Reduktions-Potenzial in der Denitrifikationseinrichtung 2 (vgl. die Schaltung der Dosiereinrichtung 15 (=Pumpe 15) in Fig. 4B und 5B). Aus Frequenz und Dauer jedes Pumpvorgangs sowie der zugegebenen Menge an Kohlenstoff aus dem Kohlenstoffreservoir 14 und dem Nitrat-Gehalt im Wasser aus dem Wasserreservoir 8 wurde das Verhältnis von Kohlenstoff zu Stickstoff (C/N-Verhältnis) bei der Beschickung der Denitrifikation berechnet. Wenn die Zufuhr der Kohlenstoffquelle durch eine Erhöhung der Dosier-Frequenz (Fig. 4B) zu einer Erhöhung des C/N Verhältnisses (Fig. 4B) und zu einer Vermehrung von Bakterien und damit zu einem erhöhten Verbrauch von Sauerstoff und anderen Oxidationsmittel führt, sinkt das Oxidations-Reduktions-Potenzial in der Denitrifikationseinrichtung 2 (vgl. Messwerte der ORP-Sonde 4 in Fig. 4A). Wenn die Zufuhr der Kohlenstoffquelle durch eine Verminderung der Dosier-Frequenz (Fig. 5B) sinkt und sich damit das C/N Verhältnis verringert (Fig. 5B), steigt das Oxidations-Reduktionspotential in der Denitrifikationseinrichtung (vgl. Messwerte der ORP-Sonde 4 in Fig. 5A). Die Veränderungen benötigen mehrere Stunden, da sie auf einer Vergrößerung (Fig. 4) bzw. Verminderung der Bakterienkonzentration und -aktivität beruhen.
Wird das C/N-Verhältnis durch eine Verringerung der Pumpenfrequenz verringert (vgl. Fig. 5C), verringert sich bei gleichbleibender Prozesswasserzufuhr auch das C/N-Verhältnis (vgl. Fig. 5A). Da sich die Bakterien nun weniger stark vermehren, aber durch die Prozesswasserzufuhr einer Verdünnung unterliegen, steigt das mittlere Oxidations-Reduktions-Potenzial in der Denitrifikationseinrichtung 2 an.

In den Fig. 4C und 5C sind Messwerte des Oxidations-Reduktions-Potenzials im Flotationsapparat 6 gezeigt (vgl. Messwerte der ORP-Sonde 5 = ORP-5). In Fig. 4C ist die Reaktion des Oxidations-Reduktions-Potenzials im Vergleich zum jeweiligen Schaltzustand der Zulaufpumpe 21, in welchem entweder gepumpt wird oder nicht, gezeigt, die über Leitung 22 nitritreiches Wasser aus der Denitrifikationseinrichtung 2 in den Flotationsapparat 6 bringt und deren Aktivität in der Grafik mit "Pumpe 21" gekennzeichnet ist. Solange Nitrit in der Denitrifikationseinrichtung 2 gebildet wird, führte der Abbau von Ozon durch Nitrit im Flotationsapparat 6 zu einer temporären Abnahme des Oxidations-Reduktions-Potenzials. Nach der relativen Erhöhung der Kohlenstoff-Zufuhr wurde der von Nitrit verursachte Ozon-Abbau im Flotationsapparat immer geringer, bis er nicht mehr nachweisbar ist.
In Fig. 5C wird die Reaktion des Oxidations-Reduktions-Potenzials ebenfalls im Vergleich zum Schaltwert der Zulaufpumpe 21 gezeigt. Durch die Verringerung des C/N-Verhältnisses wird im Biofilter 7 Nitrit gebildet (Nachweis über chemisches Messverfahren, siehe Fig. 5B). Bei Aktivierung der Zulaufpumpe 21 gelangt das nitrithaltige Wasser über Leitung 22 in den Flotationsapparat 6. Hier führt es durch den von Nitrit verursachten Ozon-Abbau zu einer temporären Absenkung des Oxidations-Reduktions-Potenzials (Abb. 5C).

Mit der vorliegenden Erfindung wird es möglich, den Betrieb der Wasseraufbereitungsvorrichtung 1 zu regeln, wobei es nicht notwendig ist, Nährstoffmessungen durchzuführen, sondern eine ausreichende Bestimmung der Zustände der Wasseraufbereitungsvorrichtung anhand der Messungen der Oxidations-Reduktions-Potenziale erfolgt. Anhand der ermittelten Zustände lässt sich das C/N-Verhältnis über Regeln optimieren. Die Umsetzung der Regelung mit Hilfe von 2-Punkt-Reglern wird nachfolgend bespielhaft dargestellt.

### Regel 1:

Wird in der Denitrifikationseinrichtung 2 bei konstanter Zufuhr des Elektronendonors, z.B. einer organischen Kohlenstoffverbindung, und einer regelbaren Zufuhr des nitrathaltigen Wassers aus dem Wasserreservoir 8
a) Nitrit aufgrund seiner Reaktion mit Ozon mittels der Messung des Oxidations-Reduktions-Potenzials mit der ORP-Sonde 5 in dem Flotationsapparat 6 nachgewiesen, muss die Zufuhr des nitrathaltigen Wassers zum Biofilter 7 verringert werden.
b) eine mittlere Abnahme des Oxidations-Reduktions-Potenzials mit der ORP-Sonde 4 in der Denitrifikationseinrichtung 2 beobachtet, ist bei Erreichen eines unteren Grenzwertes die Zufuhr des nitrathaltigen Prozesswassers zum Biofilter 7 zu erhöhen.

### Regel 2:

Wird in einer Denitrifikation bei einer konstanten Zufuhr des nitrathaltigen Prozesswassers und regelbarer Dosierung eines Elektronendonors, z.B. einer geeigneten organischen Kohlenstoffverbindung,
a) Nitrit durch eine Reaktion mit Ozon mittels der Messung des Oxidations-Reduktions-Potenzials mit der ORP-Sonde 5 in dem Flotationsapparat 6 nachgewiesen, muss die Zufuhr des Elektronendonors zum Biofilter 7 erhöht werden.
b) mittlere Abnahme des Oxidations-Reduktions-Potenzials mit der ORP-Sonde 4 in der Denitrifikationseinrichtung 2 beobachtet, ist bei Erreichen eines unteren Grenzwertes die Zufuhr des Elektronendonors zum Biofilter 7 zu verringern.

### Regel 3:

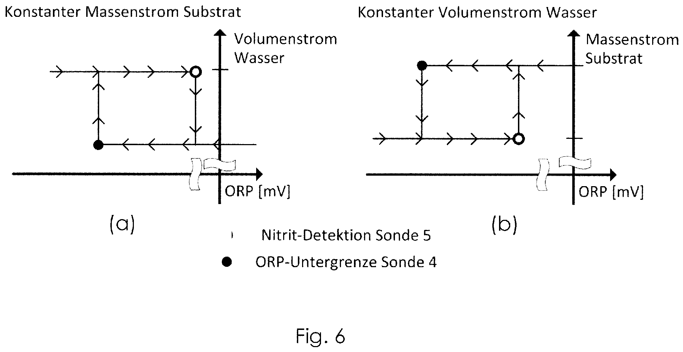

Die obengenannten Regeln 1a) und b) oder 2a) und b) werden mit jeweilig geringfügig angepasster Zuführung an, insbesondere nitrathaltigem, Wasser bzw. mit jeweilig geringfügig angepasster Zuführung an Elektronendonor so lange wiederholt, bis sich ein stabiler, giftstofffreier Prozess in der Denitrifikationseinrichtung einstellt. In Fig. 6 ist jeweils die erste Iteration der Regelung, die zur Optimierung des C/N Verhältnisses führt, schematisch dargestellt.

## Patentansprüche

1. Verfahren zur Aufbereitung von Wasser, bei dem Wasser in einer Einrichtung (2) zur Denitrifikation und in einer Einrichtung (3) zur Oxidation von Nitrit, das bei der Denitrifikation des Wassers gebildet wird, behandelt wird,
**dadurch gekennzeichnet,**
**dass** zur Verfahrenskontrolle das Oxidations-Reduktions-Potenzial des Wassers gemessen wird.

2. Verfahren nach Anspruch 1,
**dadurch gekennzeichnet,**
**dass** das Verfahren in einer Aquakulturanlage zur Aufbereitung von Wasser, in dem in der Aquakulturanlage Lebewesen gehalten werden, oder in einer Kläranlage zur Aufbereitung von Abwasser durchgeführt wird.

3. Verfahren nach Anspruch 1 oder 2,
**dadurch gekennzeichnet,**
**dass** das Wasser von der Denitrifikationseinrichtung, vorzugsweise direkt, in die Oxidationseinrichtung geleitet wird.

4. Verfahren nach einem der Ansprüche 1 bis 3,
**dadurch gekennzeichnet,**
**dass** das Oxidations-Reduktions-Potenzial in der Denitrifikationseinrichtung (2) und/oder in der Oxidationseinrichtung (3) gemessen wird.

5. Verfahren nach einem der Ansprüche 1 bis 4,
**dadurch gekennzeichnet,**
**dass** das Nitrit mittels eines Oxidationsmittels, vorzugsweise mittels Ozon, oxidiert wird.

6. Verfahren nach einem der Ansprüche 1 bis 5,
**dadurch gekennzeichnet,**
**dass** als die Oxidationseinrichtung (3) eine Einrichtung (4) zum Trennen von Stoffen aus dem Wasser, vorzugsweise ein Flotationsapparat, verwendet wird.

7. Verfahren nach einem der Ansprüche 1 bis 6,
**dadurch gekennzeichnet,**
**dass** der Volumenstrom des Wassers in die Denitrifikationseinrichtung (2) und/oder der Volumenstrom des Wassers von der in der Denitrifikationseinrichtung (2) in die Oxidationseinrichtung (3) eingestellt, vorzugsweise gesteuert oder geregelt, wird.

8. Verfahren nach einem der Ansprüche 5 bis 7,
**dadurch gekennzeichnet,**
**dass** ein Massenstrom eines Elektronendonors, vorzugsweise einer organischen Kohlenstoffverbindung, oder/und des Oxidationsmittels in das Wasser eingestellt, vorzugsweise gesteuert oder geregelt, wird.

9. Verfahren nach Anspruch 7 oder 8,
**dadurch gekennzeichnet,**
**dass** zumindest einer der Volumenströme und/oder der Massenstrom des Elektronendonors oder/und des Oxidationsmittels in Abhängigkeit von der Messung des Oxidations-Reduktions-Potenzials geregelt wird.

10. Verfahren nach einem der Ansprüche 7 bis 9,
**dadurch gekennzeichnet,**
**dass** der Volumenstrom oder/und der Massenstrom geändert wird, wenn bei Messung des Oxidations-Reduktions-Potenzials in der Denitrifikationseinrichtung (2) oder bei Messung eines vorbestimmten Grenzwerts des Oxidations-Reduktions-Potenzials in der Oxidationseinrichtung (3) ein jeweilig vorbestimmter Grenzwert erfasst wird.

11. Verfahren nach einem der Ansprüche 7 bis 10,
**dadurch gekennzeichnet,**
**dass** zumindest einer der Grenzwerte nach Änderung des Volumenstroms und/oder des Massestroms verändert wird, wenn bei Messung des Oxidations-Reduktions-Potenzials in der Denitrifikationseinrichtung ein vorbestimmter, vorzugsweise unterer, Grenzwert oder wenn bei Messung des Oxidations-Reduktions-Potenzials in der Oxidationseinrichtung ein vorbestimmter, vorzugsweise unterer, Grenzwert ermittelt wird.

12. Wasseraufbereitungsanlage, die eine Einrichtung (2) zur Denitrifikation von aufzubereitendem Wasser und eine Einrichtung (3) zur Oxidation von Nitrit, das bei der Denitrifikation des Wassers gebildet wird, aufweist, umfasst,
**dadurch gekennzeichnet,**
**dass** die Aufbereitungsvorrichtung (2) eine Einrichtung (5) zur Messung des Oxidations-Reduktions-Potenzials des Wassers aufweist.

13. Wasseraufbereitungsanlage nach Anspruch 12,
**dadurch gekennzeichnet,**
**dass** die Wasseraufbereitungsanlage (1) Teil einer Aquakulturanlage, vorzugsweise zur Fischaufzucht, einer Kläranlage oder einer Anlage zur Trinkwasseraufbereitung ist.

14. Wasseraufbereitungsanlage nach Anspruch 12 oder 13,
**dadurch gekennzeichnet,**
**dass** die Einrichtung (5) zur Messung des Oxidations-Reduktions-Potenzials in der Denitrifikationseinrichtung (2) und/oder in der Oxidationseinrichtung (3) vorgesehen ist.

15. Wasseraufbereitungsanlage nach einem der Ansprüche 12 bis 14,
**gekennzeichnet durch** eine Einrichtung zur Einstellung, vorzugsweise Regelung oder Steuerung, des Volumenstrom des, insbesondere nitrathaltigen, Wassers in die Denitrifikationseinrichtung (2) und/oder des Volumenstrom des Wassers von der in der Denitrifikationseinrichtung (2) in die Oxidationseinrichtung (3), wobei eine Regelgröße für die Regelung vorzugsweise das Oxidations-Reduktions-Potenzial des Wassers ist.
